# EUROPEAN PATENT SPECIFICATION

(11) **EP 4 511 274 B1**
(45) Date of publication and mention of the grant of the patent: **29.10.2025**
(21) Application number: 23722075.1
(22) Date of filing: 19.04.2023
(51) Int. Cl.: B62D 21/02, B62D 33/06, B62D 21/12

(54) **IMPROVED CHASSIS FOR A HEAVY VEHICLE**
VERBESSERTES FAHRGESTELL FÜR EIN SCHWERFAHRZEUG
CHÂSSIS AMÉLIORÉ POUR VÉHICULE LOURD

(30) Priority: 22.04.2022 IT 202200008069
(43) Date of publication of application: 26.02.2025
(73) Proprietor: Iveco Defence Vehicles S.p.A., 39100 Bolzano (IT)
(72) Inventor: CRISTALLI, Nicola, 39100 BOLZANO (IT); FORNASARI, Marco, 39100 BOLZANO (IT); BRAGHIERI, Davide, 39100 BOLZANO (IT)
(74) Representative: Studio Torta S.p.A.
(86) International application number: PCT/IB2023/053988
(87) International publication number: WO 2023/203496

(56) References cited:
- EP-A1- 2 363 336
- WO-A1-2019/223956
- DE-A1- 102008 003 488

## Description

### TECHNICAL FIELD

The present invention concerns an improved chassis, in particular for a heavy vehicle.

The present invention is preferably although not exclusively applied in a heavy vehicle such as a military vehicle. Reference will be made below to said application by way of example.

### STATE OF THE ART

Heavy vehicles such as military vehicles have to be reconfigured to accommodate cabs of different shape or type, according to the required use.

In particular, said cabs can require a different suspension system with respect to the side members of the chassis.

In this case, if the suspension system has to be altered, the side members have to be redesigned.

This re-design increases production costs and times as a different chassis has to be provided according to the type of cab scheduled for use.

Example of known arrangements for chassis according to the preamble of independent claim 1 are disclosed in EP2363336 A1, DE102008003488 A1 or WO2019/223956 A1.

There is therefore a need for chassis for heavy vehicles, in particular for military use, that can be used on different types of cab without increasing the vehicle production costs.

The object of the present invention is to meet the above needs in an optimized inexpensive manner.

### SUMMARY OF THE INVENTION

The above-mentioned object is achieved by a chassis and a vehicle as claimed in the attached claims.

### BRIEF DESCRIPTION OF THE DRAWINGS

For a better understanding of the present invention, a preferred embodiment is described below, by way of non-limiting example and with reference to the attached drawings in which:
- Figure 1 is a perspective view of a chassis of the invention in a first vehicle configuration;
- Figure 2 is an enlarged perspective view of a first portion of the chassis of figure 1;
- Figure 3 is an enlarged perspective view of a second portion of the chassis of figure 1;
- Figure 4 is an enlarged perspective view of a component of the chassis according to the invention;
- Figure 5 is a perspective view of a chassis of the invention in a second vehicle configuration;
- Figure 6 is an enlarged perspective view of a first portion of the chassis of figure 5; and
- Figure 7 is an enlarged perspective view of a second portion of the chassis of figure 6.

### DETAILED DISCLOSURE OF THE INVENTION

In the attached figures the number 1 indicates overall a chassis for a heavy vehicle, such as a military vehicle, in two different vehicle configurations.

In both vehicle configurations, the chassis 1 comprises a pair of side members 2, specifically a right-hand side member 2a and a left-hand side member 2b, extending parallel to a longitudinal axis A of the vehicle and in particular symmetrically thereto.

Each side member 2 therefore defines a first front end 2' and a second rear end 2" along the longitudinal axis A.

Advantageously, each side member 2 has a C-shaped section facing the respective side member 2 and essentially comprising a vertical wall 3, substantially perpendicular to the ground, and a pair of walls 4', 4" extending cantilevered from the vertical wall 3, preferably perpendicular to it and parallel to each other.

In detail, the walls 4', 4" extend cantilevered from terminal ends of the vertical wall 3.

According to the invention, the chassis 1 comprises an extension system 5 connected to both the side members 2 so as to provide anchoring points for different vehicle cabs, in particular to different suspension systems for said cabs and to relative steering systems of the vehicle.

In further detail, the extension system 5 is fixed to the front end 2' of the side members 2 and comprises a pair of lateral portions 6. The lateral portions 6 are advantageously each fixed to one of the side members 2, in particular outside the space laterally comprised by the latter, namely facing the outside.

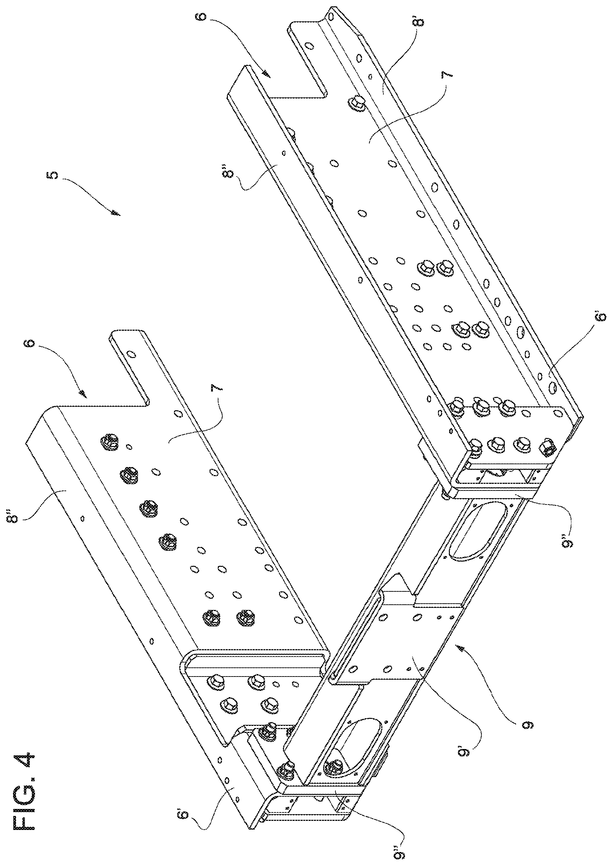

In detail, as better illustrated in figure 4, each lateral portion 6 has a C-shaped section facing the opposite side with respect to the side member 2 to which it is fixed and comprising essentially a vertical wall 7, substantially parallel to the wall 3 of the side member 2, and a pair of walls 8', 8" extending cantilevered from the vertical wall 7, preferably perpendicular to it and parallel to each other.

In particular, the vertical wall 7 defines a plurality of openings suitable for fixing the lateral portion 6 to the respective side member, for example by means of threaded elements.

Advantageously, the lower wall 8' of each lateral portion 6 is substantially parallel to the lower wall 4' of the respective side member 2. On the other hand, preferably the upper wall 8" of each lateral portion 6 is vertically superior to the upper wall 4" of the respective side member 2, in other words, the vertical wall 7 has a greater vertical extension than the vertical wall 3 of the respective side member 2.

Each lateral portion 6 extends longitudinally so that the respective vertical wall 7, for over half of its longitudinal extension, faces the respective vertical wall 3 of the side member 2 and for the remaining portion extends beyond the front portion 2' of the side member 2, thus defining a free portion 6'.

In particular, said free portion 6' has a tapered shape, namely, preferably, it has a lesser vertical extension as it moves longitudinally away from the side members 2 until reaching a minimum at the end. In particular, the reduction of the vertical extension is substantially linear on the edge facing the ground.

The extension system 5 also comprises an end element 9 connecting the lateral portions 6 to each other, in particular the free portions 6' of the lateral portions 6.

In detail, the end element 9 extends crosswise to the longitudinal axis A and comprises a central portion 9' and a pair of end portions 9" with respect to the extension thereof. The end flanges 9" are advantageously configured as flanges suitable for being fixed to the free portions 6' of the lateral portions 6 so as to connect the latter to each other.

Advantageously, the central portion 9' is shaped as a quadrangular section and advantageously formed as a box element.

As mentioned above, the extension system 5 is configured to support different suspension configurations 20, 30 for a vehicle cab and a steering system 11 for the same.

In both the suspension configurations 20, 30, the steering system 11 comprises a steering mechanism 13, not further described, since it can be made in any way, fixed to the lateral portions 6 of the extension system 5, advantageously on the respective free portions 6'.

In particular, the steering mechanism 13 is fixed by means of a hub 12 rigidly carried, for example via threaded means, by the respective vertical wall 7 of the lateral portion 6 and extending cantilevered from it in a transverse direction beyond the extension of the end walls 8', 8".

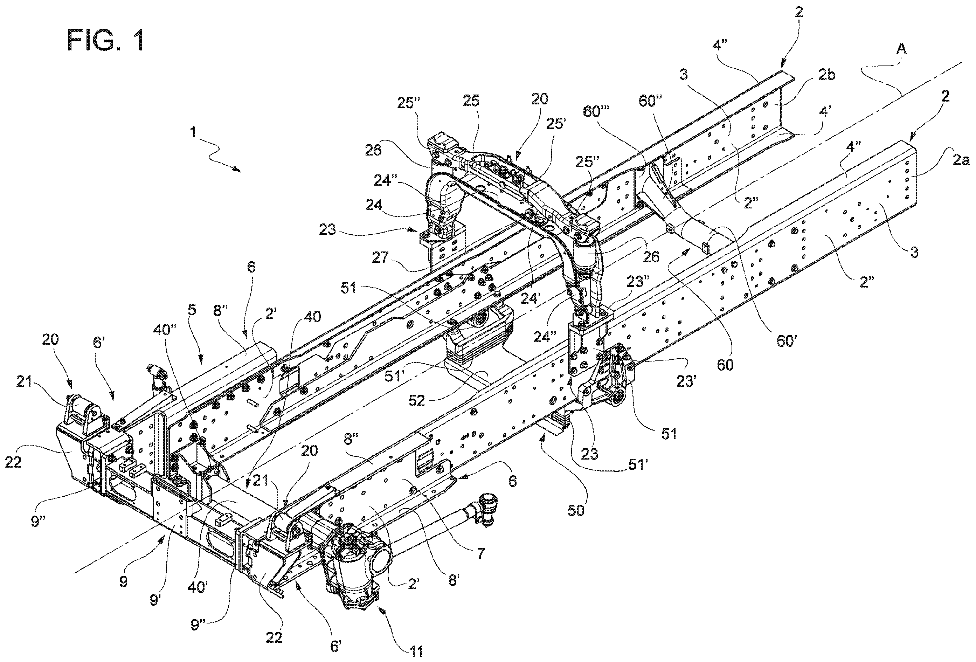

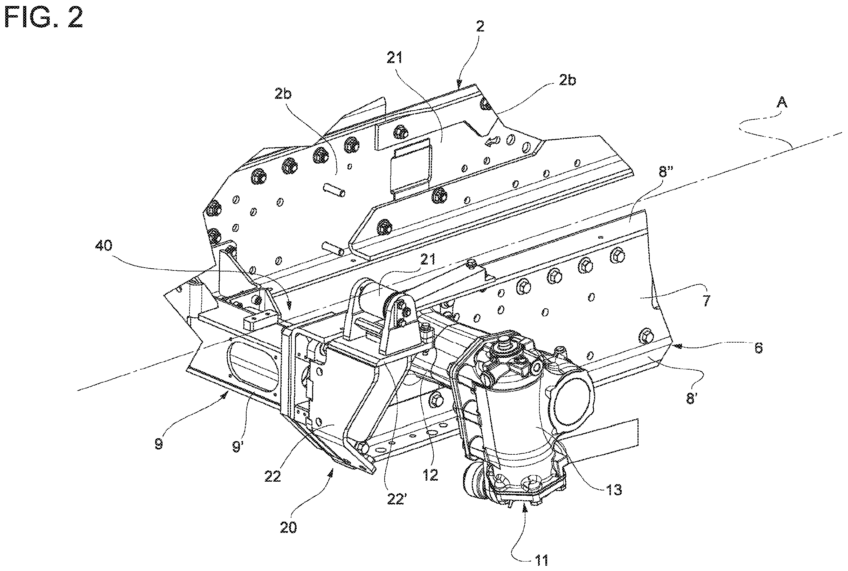

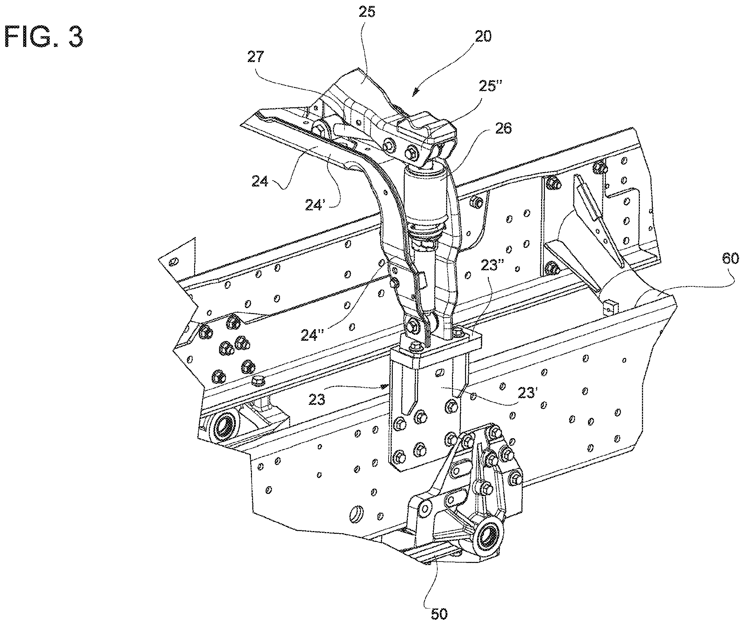

Figures 1 to 3 illustrate a first configuration of a suspension system 20 for cab applicable to the chassis according to the invention.

In this configuration, the suspension system 20 comprises frontally a hinge element 21 carried by a bracket 22 fixed integrally to the vertical wall 7 of the lateral portion 6.

In particular, the bracket 22 is shaped so as to define a support wall 22' which is advantageously aligned with the upper wall 8" of the lateral portion 6 and sized to allow fixing of the hinge element 21.

The suspension system 20 comprises at the rear a bridge element 24 carried via the use of brackets 23 on the side members 2.

In particular, the brackets 23 comprise a fixing portion 23' which is configured to be fixed, outside the space delimited by the side members 2, on the vertical wall 3 of one of the aforementioned and an end portion 23" configured to allow fixing of the bridge element 24.

In particular, the fixing portion 23' extends vertically partly facing the vertical wall 3 and partly above the upper wall 4", namely above the side members 2. In particular, the brackets 23 therefore have an inverted L shape with respect to the ground.

The bridge element 24 comprises an intermediate portion 24' extending crosswise relative to the longitudinal axis A of the vehicle and a pair of vertical portions 24" extending substantially perpendicular to the ground. Therefore the bridge element 24 has substantially a U shape with the opening facing the ground.

The rear portion of the suspension system 20 comprises in particular a rocker element 25 movably supported by the bridge element 24 and configured to cooperate with the vehicle cab.

In particular, the rocker element 25 is connected at a central portion 25' thereof to the vehicle cab whereas at respective terminal portions 25" it is connected by damping means 26, such as hydraulic cylinders, interposed between said end portions 25" and the bridge element 24.

The rocker element 25 is also connected by means of a Panhard bar 27, operatively interposed between one of the end portions 25" and the bridge element 24, advantageously with respect to the central portion 24' thereof. As known per se, the bar 27 is interposed crosswise, inclined with respect to the vertical, between the above-mentioned elements in a plane defined by a vertical axis and an axis transverse to the longitudinal axis A.

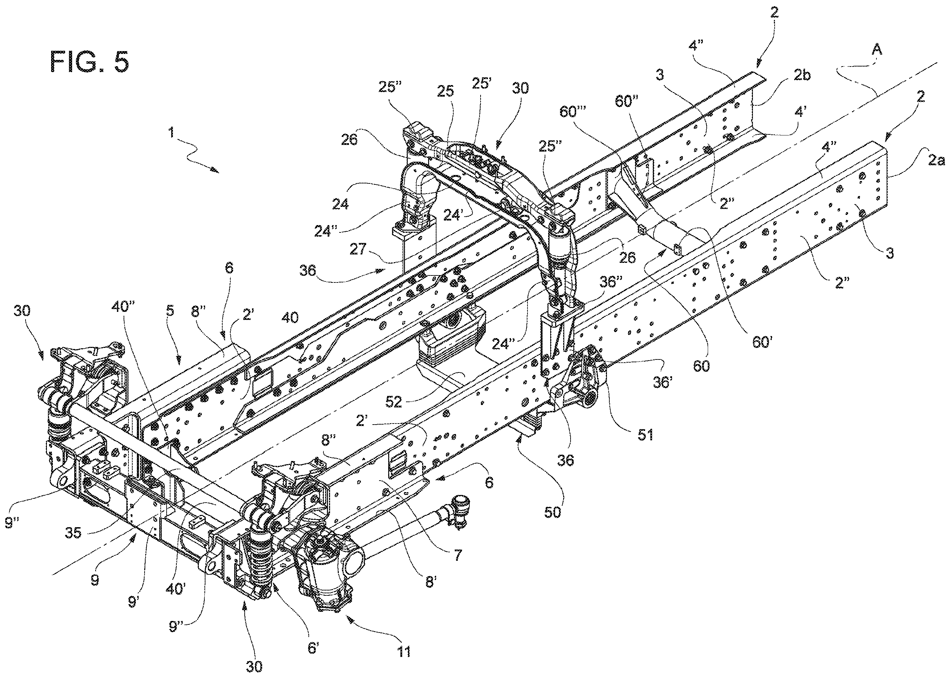

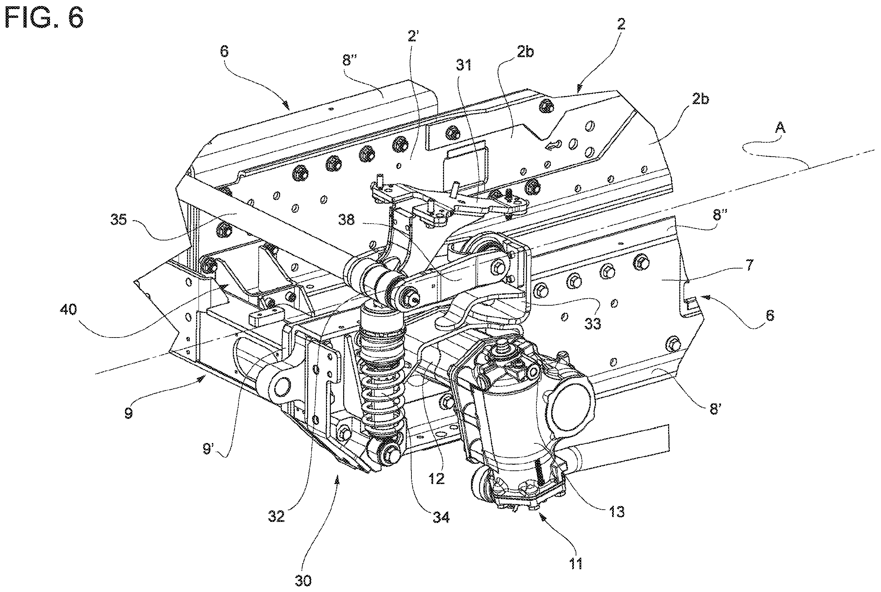

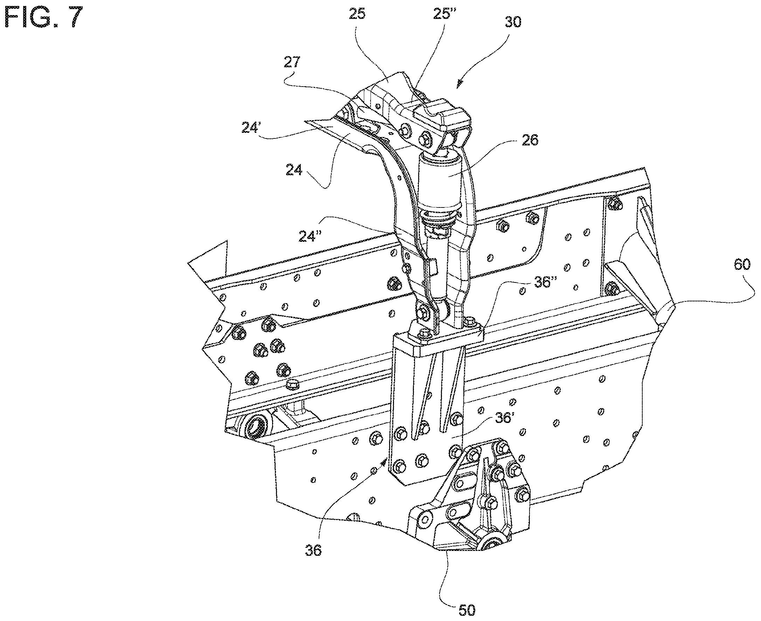

Figures 5 to 7 illustrate a second configuration of a suspension system 30 for cab applicable to the chassis according to the invention.

The suspension system 30 comprises, at the front, a support plate 31 configured to be connected to the vehicle cab and carried in a suspended manner with respect to a flange 33.

The flange 33 is fixed to the vertical wall 7 of the lateral portion 6, advantageously at the free end 6' of the latter and is shaped to laterally surround on one side, frontally and at the top the hub 12 of the steering system 11.

In particular, the plate 31 is connected to a hinge element 32 suitable for allowing the rotation of a lower end portion of the plate 31 around an axis transverse to the longitudinal axis A. In particular, the hinge element 32 is carried by damping means 34, advantageously comprising a spring-damper system, operatively interposed between the hinge element 32 and a portion of the flange 33.

The suspension system 30 further comprises a torsion bar 35 hinged with respect to the hinge element 32 and configured to connect to each other the plates 31 of each side member so as to compensate for relative torsion loads imparted by the cab.

One end of said torsion bar 35 is also connected to the flange 33 by means of an oscillating arm 38 preferably hinged at a first end to the torsion bar 35 and at a second end to the flange 33.

The rear portion of the suspension system 30 is similar to the one described for the configuration of figures 1 to 3, namely it is made with an analogous bridge element 24. However, the latter is carried on the chassis 2 by means of brackets 36 which comprise relative fixing 36' and support 36" portions.

In said configuration the support plate 36" is carried vertically above at a height greater than the configuration of figures 1 to 3 and therefore support ribs are provided having larger dimensions.

The chassis 1 also comprises a plurality of cross members 40, 50, 60 operatively interposed to connect the right-hand side member 2a and the left-hand side member 2b in a transverse direction relative to the extension thereof along the longitudinal axis A.

In the embodiment illustrated, the chassis 1 comprises a front cross member 40, a rear cross member 60 and an intermediate cross member 50 longitudinally comprised between the front and rear cross members 40, 60.

The front cross member 40 is advantageously fixed to the side members 2 at the end portion of their front portion 2' so as to provide sufficient rigidity or further fix the extension system 5.

Advantageously the front cross member 40 comprises a central portion 40' and a pair of end portions 40" suitable for allowing connection with the side members 2. In particular the central portion 40' has a circular section and cylindrical shape along its extension in the transverse direction.

The end portions 40" are shaped so that the central portion 40' is lowered with respect to the lower edge 4' of the side members 2. In particular the end portions have a squared Z shape so that a portion thereof is in contact with the lower edge 4' of the side member 2 and a portion extends below it to support the central portion 40'.

The rear cross member 60 is advantageously fixed to the side members 2 in their rear portion 60 and comprises a central portion 60', a pair of end portions 60‴ suitable for allowing connection with the side members 2, and an intermediate portion 60" connecting the end portions 60‴ and the central portion 60'.

In particular the central portion 60' has a circular section and cylindrical shape along its extension in the transverse direction. Furthermore, advantageously, the central portion 60' is positioned vertically below the lower edges 4' of the side members 2.

The end portions 60‴ are advantageously shaped as flanges suitable for allowing the fixing thereof with the respective vertical walls 3 of the side members 2. Consequently the connection portions 60" are inclined relative to the vertical direction so as to connect the end portions 60‴ with the central portion 60'. Advantageously the connection portions 60" also have a circular section, preferably equal to that of the central portion 60'.

The intermediate cross member 50 is advantageously fixed to the side members 2 at the rear portion of the suspension system 20, namely of the bridge element 24, and comprises a fixing bracket 51 configured to be fixed laterally to the outside of each of the side members 2.

The fixing bracket 1 is shaped so as to define a seat for a rotatable element, for example a seat suitable for being engaged by a rotating shaft or a bush, below the lower edge 4' but on a plane parallel to the vertical wall 3 of the side members, and comprises a connection portion 51' extending vertically below the lower edge 4'.

The intermediate cross member further comprises a central portion 52 connected to the fixing brackets 51 by means of the connection portions 51'. Advantageously the central portion 52 is shaped as a plate parallel to the ground. Advantageously the intermediate cross member is made in one single piece.

The operation of the embodiment of the chassis and vehicle according to the invention described above is the following.

Once assembled, the chassis 1 is particularly rigid and can withstand forces and moments acting in any direction with respect to the longitudinal, transverse and vertical direction, and allows the assembly of cabs in various configurations according to the three-point support defined by the suspension systems 20, 30.

In particular, in the suspension system 20 the bridge element 24 more effectively withstands the damping loads since frontally the cab is fixed directly to the hinge elements 21 whereas in the suspension system 30 the bridge element 24 cooperates with the damping elements provided in the front part, guaranteeing a higher cab and greater comfort.

From the above, the advantages of a chassis and a vehicle according to the invention are evident.

Thanks to the extension system according to the invention, it is possible to install different cabs, requiring different suspension systems, in a simple inexpensive manner.

In particular, the extension system can be optimised for the specific front suspension without having to modify the side members used which can be of standard type for different vehicle configurations.

Said extension system, which can be customised according to the different vehicle configurations, can be fitted with different suspension and steering systems, thus saving time and costs in production of the vehicle.

In particular, the extension of the hub from the extension system so as to be vertically free from obstructions allows the installation of various vehicle configurations.

Lastly, it is clear that modifications and variations that do not depart from the protective scope defined by the claims can be made to the chassis and the vehicle according to the present invention.

For example, the forms of the side members and of the extension system and their relative position can be varied according to the type of cab to be connected to the chassis.

Again, the steering system could be absent and the suspension systems can be of various type.

Similarly, the form and number of transverse elements can be varied.

## Claims

1. A chassis (1) for a heavy vehicle comprising a first and a second side member (2a, 2b) extending along a longitudinal axis (A) of said vehicle between a first end portion (2') and a second end portion (2"), said chassis (1) comprising an extension system (5) fixed to said first end portion (2') and extending along said longitudinal axis (A) beyond said first end portion (2'), said extension system (5) being configured to support different suspension configurations (20, 30) to support a cab of said vehicle,
wherein said extension system (5) comprises a pair of lateral portions (6) each fixed to a respective side member (2) externally with respect to the space laterally comprised thereby, a free portion (6') of each of said pair of lateral portions (6) extending longitudinally beyond the respective side member (2),
wherein each side member (2) comprises a vertical wall (3) and a pair of walls (4', 4") extending cantilevered from upper and lower edges of said vertical wall (3) in the direction of the opposite side member (2), **characterized in that** said lateral portions (6) each comprise a vertical wall (7) facing said vertical wall (3) of the respective side member (2) and a pair of walls (8', 8") extending cantilevered from upper and lower edges of said vertical wall (79) in the opposite direction of the respective side member (2).

2. The chassis according to claim 1, wherein said extension system (5) is further configured to support a steering system (11) of said vehicle.

3. The chassis according to claim 1 or 2, wherein said extension system (5) comprises an end portion (9) suitable for connecting said free portions (6') of said side portions (6).

4. The chassis according to claim 3, wherein said end portion (9) comprises a pair of lateral portions (9") suitable for allowing fixing thereof with said free portions (6") and a central portion (9') comprised between said side portions (9") formed as a box.

5. The chassis according to one of the preceding claims, wherein said vertical wall (7) of said side portions (6) extends vertically above said vertical wall (3) of the respective side member (2).

6. The chassis according to one of the preceding claims, wherein said chassis (1) comprises a hub (12) fixed to said vertical wall (7) and extending on the opposite side of said side member (2), said hub (12) being configured to carry a mechanism (13) of said steering system.

7. The chassis according to claim 6, wherein said hub (12) extends cantilevered from said vertical wall (7) beyond said pair of walls (8', 8").

8. The chassis according to one of the preceding claims comprising a first cross member (40) placed in correspondence with said first end portion (2'), said first cross member (40) comprising a pair of lateral fixing elements (40") and a central portion (40'), said lateral fixing elements (40") being shaped so as to position said central portion (40') vertically below said side members (2).

9. The chassis according to one of the preceding claims, comprising a second cross member (60) placed in correspondence with said second end portion (2"), said second cross member (60) comprising a pair of lateral fixing elements (60‴) and a central portion (60'), said lateral fixing elements (60‴) being shaped so as to position said central portion (60') vertically below said side members (2).

10. The chassis according to claim 9, wherein said central portion (60') has a circular section, said second cross member (60) comprising a pair of connecting portions (60") having at least partially circular cross-section and configured for connecting said central portion (60') to said lateral fixing elements (60‴).

11. The chassis according to one of the preceding claims, comprising a third cross member element (50) placed between said first and said second end portions (2', 2"), said third cross member (50) comprising a pair of lateral fixing flanges (51) and a central portion (52), said lateral fixing flanges (51) being shaped so as to position said central portion (52) vertically below said side members (2).

12. The chassis according to claim 11, wherein said central portion (62) has the shape of a plate parallel to the ground.

13. The chassis according to claim 11 or 12, wherein said lateral fixing flanges (51) define a seat suitable for engaging a rotatable element.

14. A vehicle comprising a chassis (1) according to any one of the preceding claims, a cab, a suspension system (20, 30) for supporting said cab on said chassis (1) and a steering system (11) carried by said chassis (1).

15. The vehicle according to claim 14, wherein said suspension system (20, 30) comprises a rear part provided with a bridge element (24) fixed to said side members (2) by means of respective brackets (23, 36), and a support element (25) carried in a movable way by said bridge element (24), said support element (25) being connected to said cab.

16. The vehicle according to claim 15, wherein said brackets (23, 36) comprise a fixing portion (23', 36') fixed to said side members (2) and extending above them and an end portion (23", 36") connected to said bridge element (24).

17. The vehicle according to claim 15 or 16, when dependent on claims 11 to 13, wherein said rear portion is placed in correspondence with said third cross member (50).

18. The vehicle according to one of the claims 14 to 17, wherein said suspension system (20) comprises a front part carried by said extension system (5), said front part (20) comprising a support bracket (22) fixed to said extension system (5), said support bracket (21) carrying a hinged element (21) cooperating with said cab.

19. The vehicle according to one of the claims from 14 to 17, wherein said suspension system (20) comprises a front part carried by said extension system (5), said front part (30) comprising a support bracket (31) fixed to said extension system (5), said support bracket (31) cooperating with said cab and carried in a movable way by a flange (33) fixed to said extension system (5).

20. The vehicle according to claim 19, wherein said suspension system (20) comprises a hinged element (32) hinged to said support bracket (31) and carried in a movable way by damping means (34) operatively interposed between said hinge element (32) and said flange (33).

21. The vehicle according to claim 20, wherein said suspension system (20) comprises a torsion bar (35) connecting the support brackets (31) of each side member (2) to each other.

22. The vehicle according to claim 21 wherein said suspension system (30) comprises an arm (38) configured to connect the ends of said torsion bar (35) to said flanges (33).

## Patentansprüche

1. Chassis (1) für ein schweres Fahrzeug, umfassend ein erstes und ein zweites Seitenelement (2a, 2b), die sich entlang einer Längsachse (A) des Fahrzeugs zwischen einem ersten Endabschnitt (2') und einem zweiten Endabschnitt (2") erstrecken, wobei das Chassis (1) ein Verlängerungssystem (5) umfasst, das an dem ersten Endabschnitt (2') befestigt ist und sich entlang der Längsachse (A) über den ersten Endabschnitt (2') hinaus erstreckt, wobei das Verlängerungssystem (5) konfiguriert ist, um verschiedene Aufhängungskonfigurationen (20, 30) zu stützen, um eine Kabine des Fahrzeugs zu stützen,
wobei das Verlängerungssystem (5) ein Paar von seitlichen Abschnitten (6) umfasst, die jeweils an einem jeweiligen Seitenelement (2) extern in Bezug auf den Raum, der seitlich davon umfasst ist, befestigt sind, wobei sich ein freier Abschnitt (6') von jedem des Paars von seitlichen Abschnitten (6) in Längsrichtung über das jeweilige Seitenelement (2) hinaus erstreckt,
wobei jedes Seitenelement (2) eine vertikale Wand (3) und ein Paar von Wänden (4', 4"), die sich freitragend von oberen und unteren Kanten der vertikalen Wand (3) in die Richtung des gegenüberliegenden Seitenelements (2) erstrecken, umfasst,
**dadurch gekennzeichnet, dass** die seitlichen Abschnitte (6) jeweils eine vertikale Wand (7), die der vertikalen Wand (3) des jeweiligen Seitenelements (2) zugewandt ist, und ein Paar von Wänden (8', 8"), die sich freitragend von oberen und unteren Kanten der vertikalen Wand (79) in die entgegengesetzte Richtung des jeweiligen Seitenelements (2) erstrecken, umfassen.

2. Chassis nach Anspruch 1, wobei das Verlängerungssystem (5) ferner konfiguriert ist, um ein Lenksystem (11) des Fahrzeugs zu stützen.

3. Chassis nach Anspruch 1 oder 2, wobei das Verlängerungssystem (5) einen Endabschnitt (9) umfasst, der zum Verbinden der freien Abschnitte (6') der Seitenabschnitte (6) geeignet ist.

4. Chassis nach Anspruch 3, wobei der Endabschnitt (9) ein Paar von seitlichen Abschnitten (9"), die zum Ermöglichen einer Befestigung derselben an den freien Abschnitten (6") geeignet sind, und einen zentralen Abschnitt (9') umfasst, der zwischen den Seitenabschnitten (9") umfasst ist und als ein Kasten ausgebildet ist.

5. Chassis nach einem der vorhergehenden Ansprüche, wobei sich die vertikale Wand (7) der Seitenabschnitte (6) vertikal über der vertikalen Wand (3) des jeweiligen Seitenelements (2) erstreckt.

6. Chassis nach einem der vorhergehenden Ansprüche, wobei das Chassis (1) eine Nabe (12) umfasst, die an der vertikalen Wand (7) befestigt ist und sich auf der gegenüberliegenden Seite des Seitenelements (2) erstreckt, wobei die Nabe (12) konfiguriert ist, um einen Mechanismus (13) des Lenksystems zu tragen.

7. Chassis nach Anspruch 6, wobei sich die Nabe (12) freitragend von der vertikalen Wand (7) über das Paar von Wänden (8', 8") hinaus erstreckt.

8. Chassis nach einem der vorhergehenden Ansprüche, umfassend ein erstes Querelement (40), das in Übereinstimmung mit dem ersten Endabschnitt (2') platziert ist, wobei das erste Querelement (40) ein Paar von seitlichen Befestigungselementen (40") und einen zentralen Abschnitt (40') umfasst, wobei die seitlichen Befestigungselemente (40") geformt sind, um den zentralen Abschnitt (40') vertikal unter den Seitenelementen (2) zu positionieren.

9. Chassis nach einem der vorhergehenden Ansprüche, umfassend ein zweites Querelement (60), das in Übereinstimmung mit dem zweiten Endabschnitt (2") platziert ist, wobei das zweite Querelement (60) ein Paar von seitlichen Befestigungselementen (60"') und einen zentralen Abschnitt (60') umfasst, wobei die seitlichen Befestigungselemente (60"') geformt sind, um den zentralen Abschnitt (60') vertikal unter den Seitenelementen (2) zu positionieren.

10. Chassis nach Anspruch 9, wobei der zentrale Abschnitt (60') einen kreisförmigen Querschnitt aufweist, wobei das zweite Querelement (60) ein Paar von Verbindungsabschnitten (60") umfasst, die einen zumindest teilweise kreisförmigen Querschnitt aufweisen und zum Verbinden des zentralen Abschnitts (60') mit den seitlichen Befestigungselementen (60"') konfiguriert sind.

11. Chassis nach einem der vorhergehenden Ansprüche, umfassend ein drittes Querelement (50), das zwischen dem ersten und dem zweiten Endabschnitt (2', 2") platziert ist, wobei das dritte Querelement (50) ein Paar von seitlichen Befestigungsflanschen (51) und einen zentralen Abschnitt (52) umfasst, wobei die seitlichen Befestigungsflansche (51) geformt sind, um den zentralen Abschnitt (52) vertikal unter den Seitenelementen (2) zu positionieren.

12. Chassis nach Anspruch 11, wobei der zentrale Abschnitt (62) die Form einer Platte parallel zum Boden aufweist.

13. Chassis nach Anspruch 11 oder 12, wobei die seitlichen Befestigungsflansche (51) einen Sitz definieren, der zum Eingriff eines drehbaren Elements geeignet ist.

14. Fahrzeug, umfassend ein Chassis (1) nach einem der vorhergehenden Ansprüche, eine Kabine, ein Aufhängungssystem (20, 30) zum Stützen der Kabine an dem Chassis (1) und ein Lenksystem (11), das von dem Chassis (1) getragen wird.

15. Fahrzeug nach Anspruch 14, wobei das Aufhängungssystem (20, 30) einen hinteren Teil, der mit einem Brückenelement (24) versehen ist, das an den Seitenelementen (2) mittels jeweiliger Halterungen (23, 36) befestigt ist, und ein Stützelement (25) umfasst, das auf bewegliche Weise von dem Brückenelement (24) getragen wird, wobei das Stützelement (25) mit der Kabine verbunden ist.

16. Fahrzeug nach Anspruch 15, wobei die Halterungen (23, 36) einen Befestigungsabschnitt (23', 36'), der an den Seitenelementen (2) befestigt ist und sich über diese erstreckt, und einen Endabschnitt (23", 36"), der mit dem Brückenelement (24) verbunden ist, umfassen.

17. Fahrzeug nach Anspruch 15 oder 16, wenn abhängig von den Ansprüchen 11 bis 13, wobei der hintere Abschnitt in Übereinstimmung mit dem dritten Querelement (50) platziert ist.

18. Fahrzeug nach einem der Ansprüche 14 bis 17, wobei das Aufhängungssystem (20) einen vorderen Teil umfasst, der von dem Verlängerungssystem (5) getragen wird, wobei der vordere Teil (20) eine Stützhalterung (22) umfasst, die an dem Verlängerungssystem (5) befestigt ist, wobei die Stützhalterung (21) ein Gelenkelement (21) trägt, das mit der Kabine zusammenwirkt.

19. Fahrzeug nach einem der Ansprüche 14 bis 17, wobei das Aufhängungssystem (20) einen vorderen Teil umfasst, der von dem Verlängerungssystem (5) getragen wird, wobei der vordere Teil (30) eine Stützhalterung (22) umfasst, die an dem Verlängerungssystem (5) befestigt ist, wobei die Stützhalterung (31) mit der Kabine zusammenwirkt und auf bewegliche Weise von einem Flansch (33) getragen wird, der an dem Verlängerungssystem (5) befestigt ist.

20. Fahrzeug nach Anspruch 19, wobei das Aufhängungssystem (20) ein Gelenkelement (32) umfasst, das an der Stützhalterung (31) angelenkt ist und auf bewegliche Weise von Dämpfungsmitteln (34) getragen wird, die wirksam zwischen dem Gelenkelement (32) und dem Flansch (33) angeordnet sind.

21. Fahrzeug nach Anspruch 20, wobei das Aufhängungssystem (20) einen Torsionsstab (35) umfasst, der die Stützhalterungen (31) jedes Seitenelements (2) miteinander verbindet.

22. Fahrzeug nach Anspruch 21, wobei das Aufhängungssystem (30) einen Arm (38) umfasst, der konfiguriert ist, um die Enden des Torsionsstabs (35) mit den Flanschen (33) zu verbinden.

## Revendications

1. Châssis (1) pour véhicule lourd comprenant un premier et un deuxième longeron (2a, 2b) s'étendant le long d'un axe longitudinal (A) dudit véhicule entre une première portion d'extrémité (2') et une deuxième portion d'extrémité (2''), ledit châssis (1) comprenant un système d'extension (5) fixé à ladite première portion d'extrémité (2') et s'étendant le long dudit axe longitudinal (A) au-delà de ladite première portion d'extrémité (2'), ledit système d'extension (5) étant configuré pour supporter différentes configurations de suspension (20, 30) pour supporter une cabine dudit véhicule,
dans lequel ledit système d'extension (5) comprend une paire de portions latérales (6) fixées chacune à un longeron (2) respectif à l'extérieur par rapport à l'espace compris latéralement par celui-ci, une portion libre (6') de chacune de ladite paire de portions latérales (6) s'étendant longitudinalement au-delà du longeron (2) respectif,
dans lequel chaque longeron (2) comprend une paroi verticale (3) et une paire de parois (4', 4'') s'étendant en porte-à-faux à partir des bords supérieur et inférieur de ladite paroi verticale (3) dans la direction du longeron (2) opposé, **caractérisé en ce que** lesdites portions latérales (6) comprennent chacune une paroi verticale (7) faisant face à ladite paroi verticale (3) du longeron (2) respectif et une paire de parois (8', 8") s'étendant en porte-à-faux à partir des bords supérieur et inférieur de ladite paroi verticale (79) dans la direction opposée du longeron (2) respectif.

2. Châssis selon la revendication 1, dans lequel ledit système d'extension (5) est en outre configuré pour supporter un système de direction (11) dudit véhicule.

3. Châssis selon la revendication 1 ou 2, dans lequel ledit système d'extension (5) comprend une portion d'extrémité (9) adaptée pour relier lesdites portions libres (6') desdites portions latérales (6).

4. Châssis selon la revendication 3, dans lequel ladite portion d'extrémité (9) comprend une paire de portions latérales (9'') adaptées pour permettre leur fixation avec lesdites portions libres (6'') et une portion centrale (9') comprise entre lesdites portions latérales (9'') formées en caisson.

5. Châssis selon l'une des revendications précédentes, dans lequel ladite paroi verticale (7) desdites portions latérales (6) s'étend verticalement au-dessus de ladite paroi verticale (3) du longeron (2) respectif.

6. Châssis selon l'une des revendications précédentes, dans lequel ledit châssis (1) comprend un moyeu (12) fixé à ladite paroi verticale (7) et s'étendant sur le côté opposé dudit longeron (2), ledit moyeu (12) étant configuré pour porter un mécanisme (13) dudit système de direction.

7. Châssis selon la revendication 6, dans lequel ledit moyeu (12) s'étend en porte-à-faux à partir de ladite paroi verticale (7) au-delà de ladite paire de parois (8', 8").

8. Châssis selon l'une des revendications précédentes comprenant une première traverse (40) placée en correspondance avec ladite première portion d'extrémité (2'), ladite première traverse (40) comprenant une paire d'éléments de fixation latérale (40'') et une portion centrale (40'), lesdits éléments de fixation latérale (40") étant façonnés de manière à positionner ladite portion centrale (40') verticalement sous lesdits longerons (2).

9. Châssis selon l'une des revendications précédentes, comprenant une deuxième traverse (60) placée en correspondance avec ladite deuxième portion d'extrémité (2''), ladite deuxième traverse (60) comprenant une paire d'éléments de fixation latérale (60‴) et une portion centrale (60'), lesdits éléments de fixation latérale (60‴) étant formés de manière à positionner ladite portion centrale (60'') verticalement sous lesdits longerons (2).

10. Châssis selon la revendication 9, dans lequel ladite portion centrale (60') présente une section circulaire, ladite deuxième traverse (60) comprenant une paire de portions de liaison (60'') présentant une section transversale au moins partiellement circulaire et configurée pour relier ladite portion centrale (60'') auxdits éléments de fixation latérale (60‴).

11. Châssis selon l'une des revendications précédentes, comprenant un troisième élément de traverse (50) placé entre lesdites première et deuxième portions d'extrémité (2', 2"), ladite troisième traverse (50) comprenant une paire de brides de fixation latérale (51) et une portion centrale (52), lesdites brides de fixation latérale (51) étant formées de manière à positionner ladite portion centrale (52) verticalement sous lesdits longerons (2).

12. Châssis selon la revendication 11, dans lequel ladite portion centrale (62) présente la forme d'une plaque parallèle au sol.

13. Châssis selon la revendication 11 ou 12, dans lequel lesdites brides de fixation latérale (51) définissent un siège adapté pour être en prise avec un élément rotatif.

14. Véhicule comprenant un châssis (1) selon l'une des revendications précédentes, une cabine, un système de suspension (20, 30) pour supporter ladite cabine sur ledit châssis (1) et un système de direction (11) porté par ledit châssis (1).

15. Véhicule selon la revendication 14, dans lequel ledit système de suspension (20, 30) comprend une partie arrière munie d'un élément de pont (24) fixé auxdits longerons (2) au moyen de consoles (23, 36) respectives, et un élément de support (25) porté de manière mobile par ledit élément de pont (24), ledit élément de support (25) étant relié à ladite cabine.

16. Véhicule selon la revendication 15, dans lequel lesdites consoles (23, 36) comprennent une portion de fixation (23', 36') fixée auxdits longerons (2) et s'étendant au-dessus d'eux et une portion d'extrémité (23'', 36‴) reliée audit élément de pont (24).

17. Véhicule selon la revendication 15 ou 16, lorsqu'elle dépend des revendications 11 à 13, dans lequel ladite portion arrière est placée en correspondance avec ladite troisième traverse (50).

18. Véhicule selon l'une des revendications 14 à 17, dans lequel ledit système de suspension (20) comprend une partie avant portée par ledit système d'extension (5), ladite partie avant (20) comprenant une console de support (22) fixée audit système d'extension (5), ladite console de support (21) portant un élément articulé (21) coopérant avec ladite cabine.

19. Véhicule selon l'une des revendications 14 à 17, dans lequel ledit système de suspension (20) comprend une partie avant portée par ledit système d'extension (5), ladite partie avant (30) comprenant une console de support (31) fixée audit système d'extension (5), ladite console de support (31) coopérant avec ladite cabine et étant portée de manière mobile par une bride (33) fixée audit système d'extension (5).

20. Véhicule selon la revendication 19, dans lequel ledit système de suspension (20) comprend un élément articulé (32) articulé sur ladite console de support (31) et porté de manière mobile par des moyens d'amortissement (34) interposés de manière opérationnelle entre ledit élément articulé (32) et ladite bride (33).

21. Véhicule selon la revendication 20, dans lequel ledit système de suspension (20) comprend une barre de torsion (35) reliant entre elles les consoles de support (31) de chaque longeron (2).

22. Véhicule selon la revendication 21 dans lequel ledit système de suspension (30) comprend un bras (38) configuré pour relier les extrémités de ladite barre de torsion (35) auxdites brides (33).
